# EUROPÄISCHE PATENTANMELDUNG

(11) **EP 3 372 285 A1**
(43) Veröffentlichungstag der Anmeldung: **12.09.2018**
(21) Anmeldenummer: 18160145.1
(22) Anmeldetag: 06.03.2018
(51) Int. Cl.: A63B 57/60, B60S 3/04

(54) **VERFAHREN ZUM BETRIEB EINER REINIGUNGSSTRASSE FÜR GOLFZUBEHÖR UND EINE NACH DEM VERFAHREN ARBEITENDE REINIGUNGSSTRASSE**

(30) Priorität: 08.03.2017 DE 102017104815
(71) Anmelder: Schülein, Robert, 91555 Feuchtwangen (DE)
(72) Erfinder: Schülein, Robert, 91555 Feuchtwangen (DE)
(74) Vertreter: Mielke, Klaus

(57) **Zusammenfassung**

Die Erfindung betrifft ein Verfahren zum Betrieb einer Reinigungsstraße (R) für das Golfzubehör einer einzelnen Person, insbesondere zur wassergestützten Reinigung von Golfschlägern (GL), Golfbällen (GB), Golftrolleys (GT) und/oder Golfschuhen (GS), mit mindestens teilweise hintereinander angeordneten Reinigungsstationen (H, S, L, B, W). Dabei wird das zu reinigende Golfzubehör von der Person in einem getakteten Durchschubbetrieb an Reinigungsstationen der Reinigungsstraße herangeführt. Pro Arbeitstakt (A2, A3) sind zumindest zwei Reinigungsstationen gleichzeitig nutzbar. Die besondere Wirkung einer erfindungsgemäßen Reinigungsstraße liegt in einer Überlagerung eines Durchschubbetriebs mit Arbeitstakten, so dass Reinigungsstationen von einer Person in einer besonders zeitsparenden und individuellen Weise sowohl seriell als auch parallel genutzt werden können. Hierzu sind die Reinigungsstationen in einer Plattform derart teilweise hintereinander angeordnet, dass an diese das zu reinigende Golfzubehör von einer Person in einem Durchschubbetrieb mit zumindest zwei aufeinander folgenden Arbeitstakten heranführbar ist, und dabei zumindest zwei Reinigungsstationen gleichzeitig in einem Arbeitsabstand nutzbar sind.

## Beschreibung

Die Erfindung betrifft ein Verfahren zum Betrieb einer Reinigungsstraße für das Golfzubehör einer einzelnen Person, sowie eine Reinigungsstraße für das Golfzubehör einer einzelnen Person.

Unter dem Begriff Golfzubehör versteht die Erfindung sowohl die Sportgeräte für das Golfspiel, insbesondere Golfschläger und Golfbälle, aber auch weitere persönliche Ausrüstungsgegenstände, insbesondere Golftrolleys zum Transport der Sportgeräte sowie Schuhe und Bekleidungsstücke. Bei Golftrolleys handelt es sich um in der Regel 1- oder 2-achsige Zug- und/oder Schubwagen mit 1 bis 4 Rädern mit und ohne Batterie-Fahrantrieb für den Transport von Golfbags. Darin können das Sportgerät und persönliche Ausrüstungsgegenstände untergebracht werden. Besonders verbreitet sind 3-rädrige Ausführungen von Golftrolleys mit einer zweirädrigen Hinterachse und einem z.B. drehbaren Vorderrad an der Vorderachse. Golftrolleys werden gelegentlich auch anders bezeichnet, z.B. einfach als eine Transportkarre oder ein Caddie.

Aus der DE 101 04 959 A1 ist eine Vorrichtung zum Reinigen von Golfzubehör bekannt. Diese weist eine Reihe von schrankartig nebeneinander angeordneten modulartigen Reinigungseinheiten für ein einzelnes Golfzubehör auf, die jeweils frontseitig bedienbar sind. Hierzu muss ein Benutzer seitlich an eine ausgewählte Einheit herantreten und sich dieser zuwenden. Diese Anordnung weist den Nachteil auf, dass die Einheiten wegen deren frontseitiger Bedienung quer zum Arbeitsfortschritt ungünstig angeordnet sind. Ein weiterer Nachteil ist die reihenartige Anordnung der Einheiten. Diese erfordert einen großen Platzbedarf und ein Benutzer kann nur jeweils eine ausgewählte Einheit der Reihe nutzen. Die Reinigungs- und Umsetzzeit eines Golfzubehörs auf eine freie Einheit beträgt mindestens 1 Minute. So tritt bereits bei 4 Spielern eines Flights, die ihr Golfequipment reinigen wollen, eine lange Gesamtreinigungszeit von ca. 20-24 Minuten auf. Diese bekannte Vorrichtung ist somit mit einer niedrigen Arbeitsgeschwindigkeit, ungünstigen Bedienbarkeit und unübersichtlichen Zugänglichkeit behaftet. Da Benutzer an beliebige Reinigungseinheiten der Reihe frei herantreten können, d.h. davor herumlaufen und u.U. Einheiten überspringen können, sind Wartezeiten vor einzelnen Einheiten und Zeitverluste durch vergebliche Anläufe an besetzte Einheiten nicht zu vermeiden.

Aus der WO 2005/092681 A1 ist ein Reinigungsapparat insbesondere für die Räder eines Golftrolleys bekannt. Dieser weist eine Stützfläche auf, über die ein Golftrolley in einem Zug von einer Eingangs- zu einer Ausgangsseite gefahren werden kann. Beidseitig der Stützfläche ist jeweils ein überdachter Kanal mit Wasserdüsen angeordnet. Wird ein Golftrolley über die Stützfläche gezogen, so greifen nur die beidseitigen Räder an einer Trolleyachse in die Kanäle ein und werden von den Wasserdüsen gereinigt, sofern die Spurweite des Trolleys, die Breite der Stützfläche und der Abstand der gegenüber liegenden Kanäle aufeinander abgestimmt sind. Zusätzlich kann auf einen Kanal eine Mulde ausgesetzt sein. Darin können mehrere Golfschläger gleichzeitig eingesteckt und über eine Leiste an den Griffen gehalten werden. In der Mulde sind Düsen zur Reinigung der Schlägerköpfe angeordnet.

Dieser Reinigungsapparat weist mehrere Nachteile auf. So kann das mittlere Rad eines dreirädrigen Golftrolleys während einer Durchfahrt nicht mitgereinigt werden. Vielmehr muss dieses separat nachgereinigt werden. Zudem können nur Räder von Golftrolleys gereinigt werden, deren Spurweite etwa der Breite der Stützfläche entspricht. Schließlich muss das Einstecken zu reinigender Schläger in die Mulde sowie die Entnahme gereinigter Schläger aus der Mulde zeitaufwendig vor oder nach einer Durchfahrt erfolgen.

Aus der FR 2 854 577 ist eine Vorrichtung zur automatischen Reinigung nur von Golfschlägern bekannt. Diese weist in Reihe nebeneinander angeordnete Stationen auf. Dabei bilden drei erste Stationen eine Bürstenzone, eine zweite Station eine Spülzone und eine dritte Station eine Trocknungszone für Schlägerköpfe. Eine Vielzahl von Golfschlägern können hintereinander an den Stationen vorbeigeführt werden. Diese Vorrichtung weist den Nachteil auf, dass die reihenartige Anordnung der Stationen einen großen Platzbedarf erfordert. Zudem dauert es eine erhebliche Zeit, bis ein einzelner Schläger die gesamte Anlage durchlaufen hat und von seinem Besitzer wieder entgegengenommen werden kann. Zudem sind Verwechslungen nicht ausgeschlossen, wenn die Schläger verschiedener Personen der Vorrichtung zugeführt werden.

Der Erfindung liegt die Aufgabe zugrunde eine Reinigungsstraße für Golfzubehör anzugeben, womit einer einzelnen Person die Reinigung eines vielteiligen Golfzubehörs bei einer hohen Durchsatzgeschwindigkeit und kleinem Raumbedarf ermöglicht wird.

Die Aufgabe wird gelöst mit dem in Anspruch 1 angegebenen Verfahren sowie mit der in Anspruch 5 angegebenen Reinigungsstraße. Vorteilhafte weitere Ausführungen des Verfahrens und der Reinigungsstraße sind in den jeweiligen Unteransprüchen angegeben.

Das Verfahren und die Reinigungsstraße gemäß der Erfindung bieten den besonderen Vorteil, dass eine Person eine Vollreinigung ihres Golfzubehörs in ca. zwei bis drei Minuten durchführen kann, selbst wenn dieses viele Einzelteile umfasst, z.B. einen Golftrolley, Golfschläger, Golfbälle, Golfschuhe und Golfbekleidung. Es ist somit möglich, alle 10 Minuten einen neuen Flight zu beginnen. Zudem ist die erfindungsgemäße Reinigungsstraße besonders kompakt.

Eine besonders vorteilhafte Ausführung der erfindungsgemäßen Reinigungsstraße ist mit einer Reinigungsstation für das Fahrgestell eines Golftrolleys ausgerüstet, insbesondere zur Radreinigung, welche in die Plattform der Reinigungsstraße eingelassen ist. Da eine solche Fahrgestellreinigungsstation von einem Benutzer mit seinem Golftrolley ungehindert überfahrbar ist, macht die Erfindung einen schnellen Durchschubtrieb auf engstem Raum möglich.

Weist die Fahrgestellreinigungsstation gemäß einer weiteren Ausführung der Erfindung eine Anordnung mit einer Reinigungs-, Bürsten- und Antriebswalze auf, die gemeinsam mit einer Spritzwassereinrichtung in einem Reinigungsschacht in der Plattform quer zur Durchschubrichtung eines Golftrolleys parallel angeordnet sind, so können damit alle handelsüblichen ein- bzw. zweiachsigen sowie zwei-, drei- und vierrädrigen Trolleys mit verschiedenen Raddurchmessern, Radbreiten und Spurweiten gereinigt werden. Die damit erzielbare Reinigungsqualität ist so groß, dass keine Schmutzpartikel an den Rädern mehr anhaften und bei einer Verladung keine Verschmutzungen z.B. eines Pkw-Kofferraumes zu befürchten sind.

Die Reinigung von Golfzubehör nach Abschluss einer Golfrunde mit Hilfe der Erfindung läuft etwa folgendermaßen ab. Ein Golfspieler schiebt seinen Trolley über die Auffahrrampe, z.B. einem Gitterrost, soweit auf die Reinigungsstraße, dass die Räder der Vorderachse auf der Fahrgestellreinigungsstation stehen. Diese führt nun selbstständig in einem ersten Arbeitstakt die Reinigung von Radaufstandsfläche, Radkanten, Felgen, Speichen und Fahrgestell durch. Verunreinigungen an der Unterseite des Golfbags werden ebenfalls durch die Spitzwassereinrichtung abgespült. Nachdem Vorderrad und Vorderachse gereinigt sind, schiebt der Golfer den Trolley so weit vor, dass die Hinterachse über der Fahrgestellreinigungsstation im Reinigungsschacht steht und nun in einem zweiten Arbeitstakt selbstständig gereinigt werden kann. Während der Reinigungszeiten beider Achsen hat der Golfer Zeit, mit Hilfe zusätzlicher Reinigungsstationen weiteres Golfzubehör zu reinigen. So können während der Reinigung der Trolleyvorderachse z.B. Schuhsohlen an einer Schuhreinigungsstation und während der Reinigung der Trolleyhinterachse z.B. Golfschläger an einer Schlägerreinigungsstation zeitgleich gereinigt werden.

Mit der erfindungsgemäßen Reinigungsstraße können somit getaktet und in einem Durchschubbetrieb jeweils mindestens zwei Reinigungsvorgänge parallel ausgeführt werden. Hierdurch verkürzt sich die für die Reinigung eines umfangreichen Golfzubehörs erforderliche Gesamtzeit erheblich.

Für eine mögliche Vor- oder Nachbearbeitung eventuell stark anhaftender Schmutzpartikel z.B. an Schuhen und Bekleidung, kann vorteilhaft eine zusätzliche Handreinigungsstation H mit einer Druckluftpistole und/oder Wasserspritzdüse mit ergonomisch geformten Strahlrohren zur Verfügung stehen. Nach Beendigung aller Reinigungsstufen schiebt der Golfer seinen Trolley über eine Abfahrrampe von der Reinigungsstraße. Eine Reinigungsschachtabdeckung kann zur Vermeidung von Unfällen geschlossen werden.

Die Erfindung weist den Vorteil auf, dass die erfindungsgemäße Reinigungsstraße durch im Arbeitsabstand hintereinander angeordnete Reinigungsstationen gebildet ist, und dass der Golfnutzer mit dem zu reinigenden Golfzubehör in Fahrtrichtung durch die Reinigungsstation hindurchfährt, wodurch während der Benutzung von Reinigungsstationen das Golfzubehör sowohl nacheinander folgend als auch zum Teil gleichzeitig gereinigt wird. Durch die serielle Hintereinanderschaltung von Reinigungsstationen ergibt sich die Möglichkeit, dass während des getakteten Durchfahrens des Golfzubehörs durch die Reinigungsstraße der Benutzer die Möglichkeit hat, z.B. zunächst seine Schuhe an einem an der Einlaufseite der Reinigungsstraße angeordneten Schuhreiniger zu reinigen, und dass er während bzw. nach der Schuhreinigung die Möglichkeit hat, den von ihm geschobenen Golftrolley gleichzeitig einer weiteren Reinigungsstation zuzuführen, welche zunächst die Vorderräder des Golftrolleys und danach die Hinterräder reinigt. Der besondere Vorteil der Erfindung besteht somit darin, sodass Reinigungsvorgänge parallel ablaufen. So kann ein Benutzer während er den Schuhreiniger benutzt und das Vorderrad selbsttätig gereinigt wird gleichzeitig die Schläger aus seinem Golfbag entnehmen und nacheinander in eine seitliche Schlägerreinigungsstation einführen. Zusätzlich kann der Benutzer an der Einlaufseite der Reinigungsstraße eine Wasserspritzpistole und eine Pressluftpistole verwenden. Es sind z.B. während der Benutzung der Reinigungsstraße gleichzeitig drei Arbeitsvorgänge möglich.

Die Erfindung schafft eine Reinigungsstraße, bei der es im Durchlaufbetrieb möglich ist, das Golfzubehör seriell hintereinander folgend und teilweise auch parallel gleichzeitig zu reinigen. Das zu reinigende Golfzubehör wird im Durchschubbetrieb durch die Reinigungsstraße und die im Arbeitsabstand hintereinander angeordneten Reinigungsstationen geführt. Die hohe Betriebsgeschwindigkeit wird somit durch den Durchlaufbetrieb ermöglicht, das heißt, der Trolley wird in Fahrtrichtung von vorne nach hinten durchgeschoben und der Benutzer kann das Golfzubehör, d.h. insbesondere den Trolley und seine Schuhe nacheinander folgend oder sogar gleichzeitig reinigen.

Die Erfindung und weitere vorteilhafte Ausführungen derselben werden anhand der kurz angeführten Figuren nachfolgend näher erläutert. Dabei zeigt
- Fig. 1: eine Draufsicht auf eine beispielhafte, bevorzugte Ausführungsform einer Reinigungsstraße gemäß der Erfindung,
- Fig. 2: eine Seitenansicht der beispielhaften Reinigungsstraße von Fig. 1 in einem ersten Arbeitstakt, wobei ein zu reinigender Golftrolley an einer Einfahrseite in die Reinigungsstraße eingeschoben wird,
- Fig. 3: eine Seitenansicht der beispielhaften Reinigungsstraße von Fig. 1 in einem zweiten Arbeitstakt, wobei eine Fahrgestellreinigungsstation die Vorderachse des Golftrolleys reinigt und zugleich weitere Reinigungsstationen der Reinigungsstraße von der Person parallel nutzbar sind, besonders eine Schuh- und eine Handreinigungsstation,
- Fig. 4: eine Seitenansicht der beispielhaften Reinigungsstraße von Fig. 1 in einem dritten Arbeitstakt, wobei die Fahrgestellreinigungsstation die Hinterachse des Golftrolleys reinigt und zugleich weitere Reinigungsstationen der Reinigungsstraße von der Person parallel nutzbar sind, besonders eine Golfschläger- und eine Golfballreinigungsstation, und
- Fig. 5: eine Seitenansicht der beispielhaften Reinigungsstraße von Fig. 1 in einem vierten Arbeitstakt, wobei der gereinigte Golftrolley an einer Ausfahrtseite aus der Reinigungsstraße herausgeschoben wird.

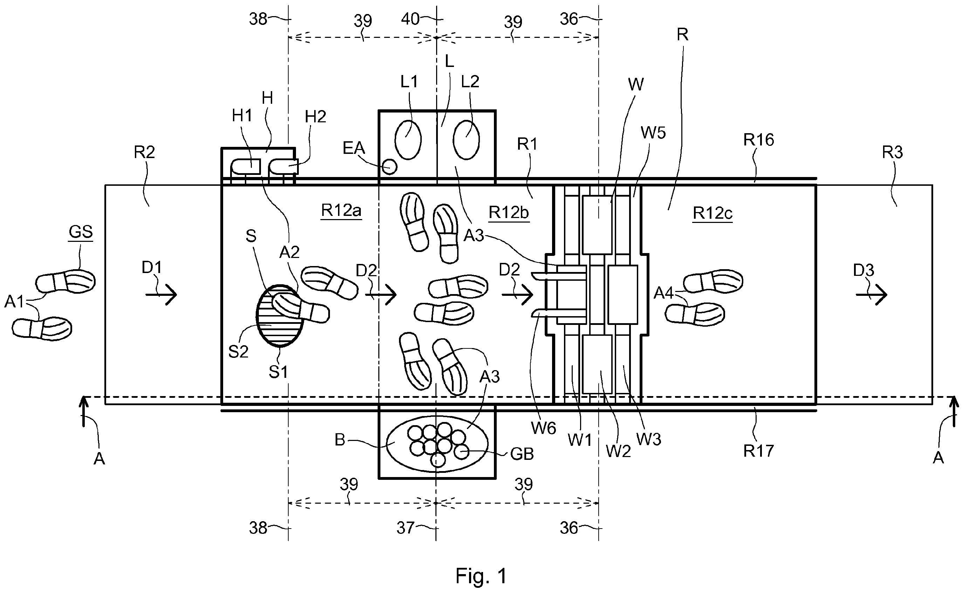

Fig. 1 zeigt schematisiert die Draufsicht auf eine bevorzugte Ausführung einer erfindungsgemäßen Reinigungsstraße R. Diese weist eine mit einem Golftrolley befahrbare Plattform R1 auf, welche z.B. stationär und ohne Überstand flächig in einen ebenen Boden eingelassen sein kann. Bei der in den Figuren dargestellten Ausführungsform ist die Plattform R1 erhöht, so dass ein darunter befindlicher Innenraum R11 für technische Aggregate leicht von außen zugänglich ist. Bei den Aggregaten kann es sich z.B. um elektrische Antriebe, rotierende Bürsten und Walzen, Wasserzuführungen und Spritzwassereinrichtungen, Schmutzsammelwannen und vieles mehr handeln. Zudem sind bei dieser Ausführung bevorzugt abnehmbare Auffahr- und Abfahrrampen R2, R3 an der Einfahrseite und der Ausfahrseite der Reinigungsstraße R angeordnet. Zudem kann vorgesehen sein, dass die Plattform 5 zur Bildung einer mobilen Reinigungsstraße R auf Rollen oder Rädern gelagert ist.

Das Befahren der Plattform R1 der Reinigungsstraße R durch eine Person mit dem Golftrolley GT zur Durchführung des erfindungsgemäßen getakteten Durchschubbetriebs ist in den Figuren durch Pfeile D1, D2, D3 symbolisiert. Dabei zeigen D1 und D2 das Auf- bzw. Abfahren eines Golftrolleys auf die bzw. von der Auffahr- und Abfahrrampen R2, R3. Der getaktete Durchschubbetrieb des Trolleys an den Reinigungsstationen der Reinigungsstraße R ist durch D2 symbolisiert. An den Seitenflanken R16, R17 der Plattform R1 sind vorteilhaft Geländer und u.U. Spritzschutzwände angebracht. Diese ermöglichen einer einzelnen Person eine gefahrlose Begehung und Durchfahrt. Zudem wird die geordnete Abwicklung eines getakteten Durchschubbetriebs durch die Person unterstützt.

Erfindungsgemäß ist die Reinigungsstraße R mit teilweise hintereinander angeordneten Reinigungsstationen jeweils für zumindest ein Golfzubehör einer einzelnen Person ausgestattet. Bei der in den Figuren 1 bis 5 gezeigten vorteilhaften Ausführung der Erfindung sind beispielhaft eine Handreinigungsstation H, eine Schuhreinigungsstation S, eine Schlägerreinigungsstation L, eine Ballreinigungsstation B und eine Fahrgestellreinigungsstation W für den Golftrolley GT vorgesehen.

Die Handreinigungsstation H weist insbesondere eine Pressluftpistole H1 für Druckluft und eine Wasserspritzdüse H2 auf, die manuell hantierbar sind. Es können noch weitere händische Hilfsmittel, z.B. Handbürsten und Lappen, vorgesehen sein. Hiermit kann z.B. besonders verschmutztes Golfzubehör, z.B. Golfschuhe und Golfbekleidung, vor- und nachgereinigt werden. Eine Handreinigungsstation H ist bevorzugt im Bereich einer Einfahrtseite der Plattform R angeordnet. Im Beispiel der Fig. 1 ist die Handreinigungsstation H an der linken Seite einer ersten Arbeitsteilfläche R12a der Plattform R1 im Anschluss an die Auffahrrampe R2 platziert. Nach Abschluss eines vorbereitenden Arbeitstaktes A1 durch Auffahren des Golftrolleys kann diese von einer Person somit bereits zu Beginn eines getakteten Durchschubs in einem ersten Arbeitstakt A2 bei der Durchführung von ersten Reinigungsschritten eingesetzt werden.

Die Schuhreinigungsstation S insbesondere für Golfschuhe GS weist bevorzugt zumindest eine Rotationsbürste S2 auf. Diese ist bevorzugt in die Plattform R1 eingelassen und mit einem Gitterrost S1 abgedeckt. Im Beispiel der Fig. 1 ist die Schuhreinigungsstation S ebenfalls im Anschluss an die Auffahrrampe R2 platziert und in einer erste Arbeitsteilfläche R12a der Plattform R1 eingelassen. Diese kann somit beim Auffahren durch den Golftrolley im vorbereitenden Arbeitstakt A1 ungehindert überfahren werden. Weiterhin kann die Schuhreinigungsstation S dann von einer Person ebenfalls bereits zu Beginn eines getakteten Durchschubs in einem ersten Arbeitstakt A2 bei der Durchführung von ersten Reinigungsschritten eingesetzt werden.

Die Schlägerreinigungsstation L weist insbesondere eine Reinigungsbox L1, insbesondere mit sensorgesteuerten Wasserdüsen, und eine danebenstehende Trocknungsbox L2 mit sensorgesteuerten Luftdüsen auf. Dabei werden die Düsen in der jeweiligen Box von den Sensoren dann aktiviert, wenn von diesen das Einschieben eines Golfschlägers GL detektiert wird. Im Beispiel der Fig. 1 ist die Schlägerreinigungsstation L an der Seite einer zweiten, annähernd mittigen Arbeitsteilfläche R12b der Plattform R1 platziert, die in Durchschubrichtung D2 auf die erste Arbeitsteilfläche R12a folgt. Diese kann von einer Person im Laufe eines weiter getakteten Durchschubs in einem zweiten Arbeitstakt A3 bei der Durchführung weiterer Reinigungsschritte genutzt werden.

Ist ein Benutzer nach Überfahren der Auffahrrampe R2 mit seinem Golftrolley am Ende des vorbereitenden Arbeitstaktes A1 auf der Plattform R1 der Reinigungsstraße 1 angekommen, so kann dieser über eine Bedienkonsole EA, welche z.B. eine elektronische Schnittstelle für bargeldlose Zahlungsmittel sowie einen Ein- und Ausschalter aufweist, die Reinigungsstationen der Reinigungsstraße 1 in Betrieb nehmen.

Vorteilhaft ist eine Ballreinigungsstation B für Golfbälle GB ebenfalls im Bereich der zweiten Arbeitsteilfläche R12b platziert. Im Beispiel der Fig. 1 ist die Ballreinigungsstation B an derjenigen Seite der zweiten, annähernd mittigen Arbeitsteilfläche R12b der Plattform R1 platziert, die der Schlägerreinigungsstation L gegenüberliegt. Diese kann von einer Person im zweiten Arbeitstakt A3 u.U. zeitgleich mit der Schlägerreinigungsstation L genutzt werden.

Die Fahrgestellreinigungsstation W für einen Golftrolley GT ist insbesondere zur Radreinigung vorgesehen und bevorzugt überfahrbar in die Plattform R1 eingelassen. Im Beispiel der Fig. 1 ist die Fahrgestellreinigungsstation W in der Plattform R1 in Durchschubrichtung D2 im Anschluss an die zweite, annähernd mittige Arbeitsteilfläche R12b platziert. Gemäß einer bevorzugten und in den Figuren bereits dargestellten Ausführungsform weist diese eine Anordnung aus einer Reinigungs-, Bürsten- und Antriebswalze W1, W2, W3 auf, die gemeinsam mit einer Spritzwassereinrichtung in einem Reinigungsschacht W5 in der Plattform quer zur Durchschubrichtung D2 eines Golftrolleys GT parallel angeordnet sind. In den Figuren sind die Spritzwassereinrichtung und die dazugehörigen Komponenten im Reinigungsschacht zur besseren Übersicht nicht dargestellt. Zudem kann der Reinigungsschacht W5 über ein ebenfalls nicht näher dargestelltes Abdeckblech geschlossen werden, um eine stolperfreie Begehbarkeit durch die Person und eine einfache Überfahrbarkeit mit dem Golftrolley zu ermöglichen. Zur ordnungsgemäßen Platzierung insbesondere mittiges Vorderrades bei einem dreirädrigen Golftrolley auf der Walzenanordnung kann eine zusätzliche, mittige Führung W6 vorgesehen sein.

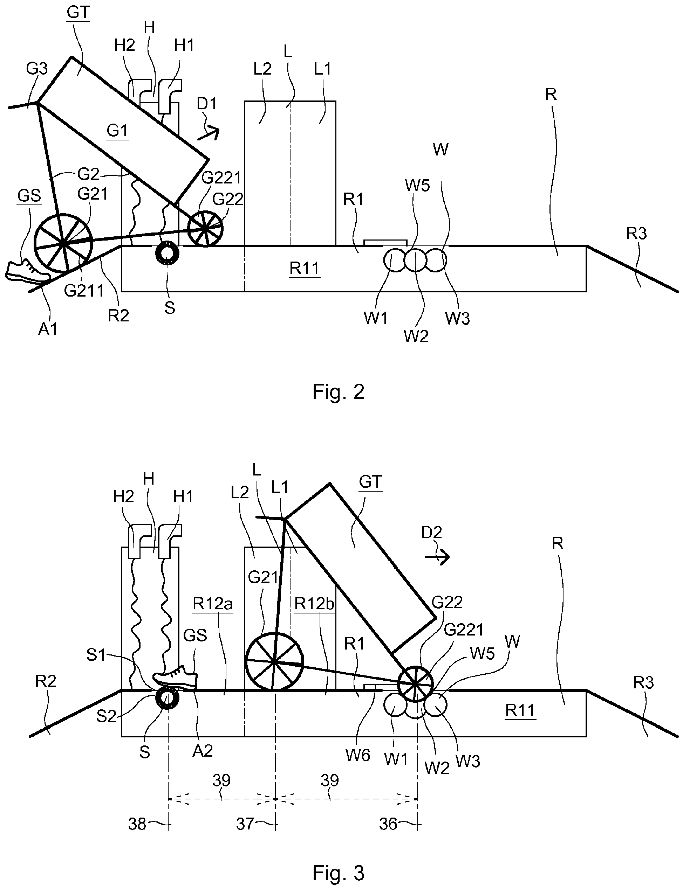

Der in den Figuren 2 bis 5 schematisch dargestellte Golftrolley GT ist beispielsweise dreirädrig. Er weist ein Fahrgestell G2 zur Halterung einer Tasche G1 zur Aufnahme von Golfzubehör auf, besonders von Golfschlägern, Golfbällen, Bekleidungsstücken usw.. Das Fahrgestell G2 kann von einer Person über einen Handgriff G3 verschoben werden und weist eine Hinterachse G21 mit Hinterrädern G211 sowie eine Vorderachse G22 mit eine zentralen Vorderrad G221 auf. Der Golftrolley GT in den Figuren ist nur beispielhaft. Ein Golftrolley kann auch 4-rädrig oder einachsig mit 2 Rädern ausgeführt sein. Die erfindungsgemäße Reinigungsstraße mit der in der Plattform R1 eingelassenen Fahrgestellreinigungsstation W macht es möglich, dass alle Typen von Golftrolleys auch mit unterschiedlicher Spurweite gereinigt werden können.

Erfindungsgemäß sind die Reinigungsstationen in der Plattform derart teilweise hintereinander angeordnet, dass an diese das zu reinigende Golfzubehör von einer Person, welche die Reinigungsstation aktuell benutzt, in einem Durchschubbetrieb mit zumindest zwei aufeinander folgenden Arbeitstakten heranführbar und dabei zumindest zwei Reinigungsstationen gleichzeitig in einem Arbeitsabstand nutzbar.

So sind im Beispiel der Fig. 1 die Schuhreinigungsstation S und die Fahrgestellreinigungsstation W für den Golftrolley GT in Durchschubrichtung D2 hintereinander angeordnet. Ebenfalls sind die Handreinigungsstation H und die Schlägerreinigungsstation L in Durchschubrichtung D2 hintereinander angeordnet. Darüber hinaus sind die Handreinigungsstation H, die Schlägerreinigungsstation L und die Ballreinigungsstation B neben den Arbeitsteilflächen R12a, R12b der Plattform R1 platziert. Zudem wird die Summe dieser Arbeitsteilflächen in Durchschubrichtung durch die Fahrgestellreinigungsstation W für den Golftrolley GT begrenzt.

Diese Anordnung macht es möglich, dass das zu reinigende Golfzubehör von der Person in einem getakteten Durchschubbetrieb an die Reinigungsstationen der erfindungsgemäßen Reinigungsstraße herangeführt werden kann und pro Arbeitstakt zumindest zwei Reinigungsstationen gleichzeitig nutzbar sind. Die besondere Wirkung der erfindungsgemäßen Reinigungsstraße liegt somit in einer Überlagerung eines Durchschubbetriebs mit Arbeitstakten, so dass Reinigungsstationen von einer Person in einer besonders zeitsparenden und individuellen Weise sowohl seriell als auch parallel genutzt werden können.

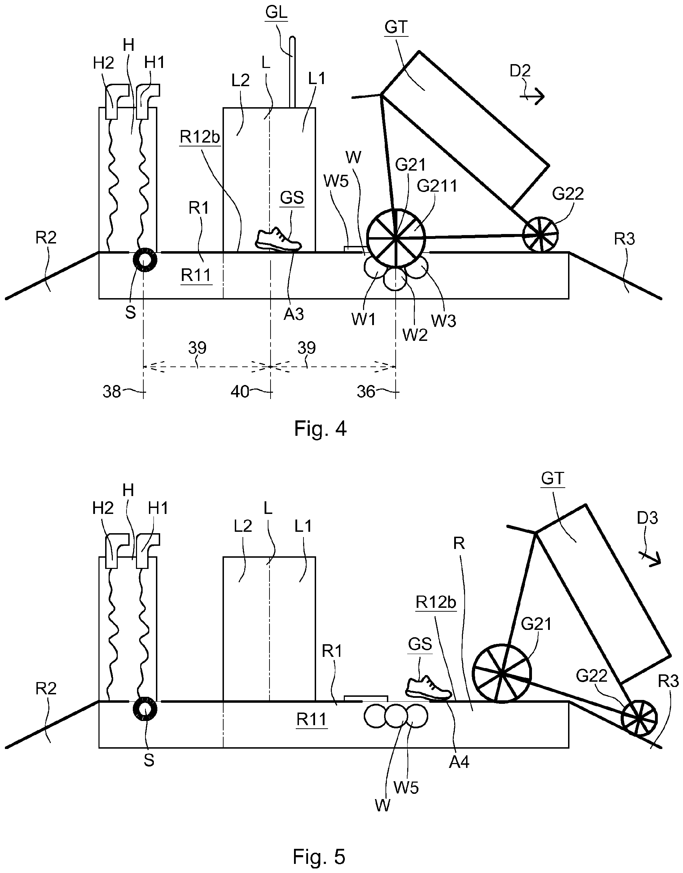

Dies wird nachfolgend am Beispiel der Figuren 2 bis 5 näher erläutert. Diese zeigen die beispielhafte Reinigungsstraße von Fig. 1 jeweils in einer Seitenansicht entlang der Schnittachse A-A in unterschiedlichen Arbeitstakten A1 bis A4. So zeigt Fig. 2 die Reinigungsstraße in einem ersten Arbeitstakt, bei dem ein zu reinigender Golftrolley an einer Einfahrseite in die Reinigungsstraße eingeschoben wird. Fig. 3 zeigt die Reinigungsstraße in einem zweiten Arbeitstakt, bei dem eine Fahrgestellreinigungsstation die Vorderachse des Golftrolleys reinigt und zugleich weitere Reinigungsstationen der Reinigungsstraße parallel nutzbar sind, insbesondere eine Schuh- und eine Handreinigungsstation. Fig. 4 zeigt die Reinigungsstraße in einem dritten Arbeitstakt, bei dem die Fahrgestellreinigungsstation die Hinterachse des Golftrolleys reinigt und zugleich weitere Reinigungsstationen der Reinigungsstraße parallel nutzbar sind, insbesondere eine Golfschläger- und eine Golfballreinigungsstation. Fig. 5 zeigt schließlich die Reinigungsstraße in einem vierten Arbeitstakt, bei dem der gereinigte Golftrolley an einer Auslaufseite wieder aus der Reinigungsstraße herausgefahren wird.

So zeigt Fig. 2 die Reinigungsstraße im ersten Arbeitstakt A1, bei dem ein zu reinigender Golftrolley GT an der Einfahrseite über die Auffahrrampe R2 in Richtung D1 in die Reinigungsstraße R eingeschoben wird. Bereits bei diesem Teil des Durchschubbetriebs kann z.B. die Handreinigungsstation H, welche Druckluft und/oder Spitzwasser über eine Pressluftpistole und/oder Wasserspritzdüse H1, H2 bereitstellt, für eine Vorreinigung genutzt werden.

Fig. 3 zeigt die Reinigungsstraße R in einem zweiten Arbeitstakt A2, bei dem eine Fahrgestellreinigungsstation W die Vorderachse G22 des Golftrolleys GT reinigt. Hierzu ist der Golftrolleys GT in Richtung D2 soweit vorgeschoben, so dass das Vorderrad G221 mit der Lauffläche auf der Anordnung der Walzen W1, W2, W3 zu liegen kommen und gereinigt werden kann. Zugleich sind weitere Reinigungsstationen der Reinigungsstraße parallel nutzbar. Hierzu kann sich die Personen auf der ersten Arbeitsteilfläche R12a z.B. der Schuhreinigungsstation S für Golfschuhe GS zuwenden und bei Bedarf zusätzlich die Handreinigungsstation H gebrauchen. Die Zeit bis zum Abschluss der Vorderradreinigung kann somit für die Durchführung weiterer paralleler Reinigungsschritte genutzt werden.

Dies wird durch den vorteilhaften Aufbau der erfindungsgemäßen Reinigungsstraße R ermöglicht. Dabei sind die Reinigungsstationen H, S, L, B, W derart teilweise hintereinander angeordnet, dass an diese das zu reinigende Golfzubehör GL, GB, GT, GS von der Person in einem Durchschubbetrieb mit zumindest zwei aufeinander folgenden Arbeitstakten A2, A3 heranführbar und dabei zumindest zwei Reinigungsstationen gleichzeitig in einem Arbeitsabstand 36, 37, 38, 39 nutzbar sind. Die Reinigungsstationen sind somit vorteilhaft auf und um die Arbeitsteilflächen R12a, R12b platziert, dass eine Person diese möglichst unmittelbar ergreifen kann bzw. ihre Position auf der Plattform R1 nur geringfügig verändern muss.

Dies ist im Beispiel der Fig. 3 symbolisiert mittels einer Arbeitslinie 36 durch die Radreinigungsstation W und einer Arbeitslinie 38 durch die Schuhreinigungsstation S. Eine Mittenlinie 37 auf der Höhe der Hinterachse G21 des Golftrolleys GT ist über Arbeitsabstände 39 annähernd gleich weit von den Arbeitslinien 36, 38 entfernt. In diesem Zustand ist, wie aus Fig. 1 und 3 ersichtlich, die Arbeitsteilfläche R12b durch den Golftrolley GT belegt, während die Arbeitsteilfläche R12a eine Hinwendung der Person an mehrere benachbarte Reinigungsstationen S und H ermöglicht.

Fig. 4 zeigt die Reinigungsstraße R in einem dritten Arbeitstakt A3, bei dem die Fahrgestellreinigungsstation W die Hinterachse G21 des Golftrolleys GT reinigt. Hierzu ist der Golftrolleys GT in Richtung D2 von der Person weiter vorgeschoben, so dass die Hinterräder G211 mit den Laufflächen auf der Anordnung der Walzen W1, W2, W3 zu liegen kommen und gereinigt werden können. Zugleich sind weitere Reinigungsstationen der Reinigungsstraße parallel nutzbar. Hierzu kann sich die Personen auf der zweiten Arbeitsteilfläche R12b z.B. den Golfschläger- und Golfballreinigungsstationen L, B zuwenden und bei Bedarf zusätzlich die Handreinigungsstation H gebrauchen. Die Zeit bis zum Abschluss der Hinterradreinigung kann somit für die Durchführung weiterer paralleler Reinigungsschritte genutzt werden.

Die hier sind die Reinigungsstationen vorteilhaft auf und um die Arbeitsteilfläche R12b platziert, dass eine Person diese möglichst unmittelbar ergreifen kann bzw. ihre Position auf der Plattform R1 nur geringfügig verändern muss. Dies ist im Beispiel der Fig. 4 ebenfalls symbolisiert mittels der Arbeitslinie 36 durch die Radreinigungsstation W und der Arbeitslinie 38 durch die Schuhreinigungsstation S. Eine Arbeitslinie 40 auf der Höhe der Schlägerreinigungsstation L ist über Arbeitsabstände 39 wiederum annähernd gleich weit von den Arbeitslinien 36, 38 entfernt. In diesem Zustand ist, wie aus Fig. 1 ersichtlich, die Arbeitsteilfläche R12b nicht mehr durch den Golftrolley GT belegt, so dass diese von der Person begehbar ist und diese eine Hinwendung an mehrere benachbarte Reinigungsstationen L, B und H ermöglicht.

Fig. 5 zeigt die Reinigungsstraße R in einem vierten Arbeitstakt A4. Hierzu schreitet der Benutzer über die Fahrgestellreinigungsstation W, deren Reinigungsschacht W5 mittlerweile durch eine nicht dargestellte Abdeckung verschlossen ist. Er betritt die dritte Arbeitsteilfläche R12c, die in Durchschubrichtung D2 nach der Fahrgestellreinigungsstation auf der Plattform folgt. Der gereinigte Golftrolley GT wird an der Ausfahrtseite über die Abfahrrampe R3 in Richtung D3 wieder aus der Reinigungsstraße R3 herausgeschoben und die Person verlässt mit dem gesamten, gereinigten Golfzubehör die erfindungsgemäße Reinigungsstraße. Diese steht nun einem weiteren Benutzer zur Durchführung der von diesem gewünschten Reinigungsschritte zur Verfügung.

Die erfindungsgemäße Reinigungsstraße kann mit den Reinigungsstationen eine geschlossene Baueinheit bilden. Bei einer weiteren, vorteilhaften Ausführungsform kann diese auch aus modular aneinander reihbaren Modulen bestehen. So können die Arbeitsteilflächen R12b und R12c mit der annähernd in der Mitte der Plattform R1 eingelassenen Fahrgestellreinigungsstation ein erstes Modul bilden. Diese kann bei Bedarf durch ein weiteres Modul ergänzt werden, welches die Arbeitsteilfläche R12a und die eingelassene Schuhreinigungsstation S umfasst. Bei Bedarf können die Handreinigungsstation H, die Schlägerreinigungsstation S und die Ballreinigungsstation B an den Seitenflanken R16, R17 der Arbeitsteilflächen R12a und R12b als separate Module angesetzt werden. Schließlich können eine Auffahr- und eine Abfahrrampe R2, R3 vorgesehen sein, sofern die Plattform einen umgebenden Boden überragt. Die modulare Bauweise bietet viele Vorteile, z.B. eine bessere Transport- und Reparaturfähigkeit. So können defekte Module für eine Reparatur abgebaut werden, ohne dass die Benutzung der verbleibenden Module eingeschränkt ist.

Insbesondere in den Figuren 1 bis 3 ist schematisiert dargestellt, dass ein Benutzer mit seinen Schuhen GS, die in Fig. 1 als Schuhsohlen symbolisiert sind, in den Bereich der Schuhreinigungsstation S gelangt. Dort kann er eine Schuhsohle reinigen, während er mit der anderen, noch zu reinigenden Schuhsohle trittsicher danebensteht. Er kann zusätzlich zur der Benutzung der Schuhreinigungsstation S auch die Pressluftpistole H1 und/oder die Spritzdüse H2 der Handreinigungsstation H zeitgleich benutzen. Die Schuhreinigungsstation S ist mit dem Trolley überfahrbar. Während der Benutzung der Schuhreinigungsstation S kann er den Golftrolley GT mit seinem Vorderrad G221 in den Bereich der Fahrgestellreinigungsstation W verfahren, wo das Vorderrad G221 gereinigt wird. Es wird zu diesem Zweck in eine bevorzugt einlauftrichterförmige Führung W6 gefahren, die innenseitig bevorzugt zusätzlich mit Bürsten besetzt ist, um eine Reinigung der Radflanken und Speichen zu gewährleisten.

Das Vorderrad G221 gelangt dabei in den Einlauf- und Reinigungsbereich der Reinigungswalze W1. Diese ist, wie in Fig. 1 gezeigt, vorteilhaft im Durchmesser bezüglich ihrer Längserstreckung dreiteilig ausgebildet. Das Vorderrad gelangt auf den im Durchmesser vergrößerten Mittelteil der Reinigungswalze W1. Der Benutzer fährt seinen Golftrolley nach Überwindung der Reinigungswalze weiter in den Walzenspalt zwischen der Reinigungswalze und einer in Fahrtrichtung dahinter angeordneten Bürstenwalze W2. Deren Mittelteil ist im Durchmesser verkleinert, um mit dem im Durchmesser vergrößerten Mittelteil der davorliegenden Reinigungswalze W1 zu korrespondieren.

Im Bereich der Bürstenwalze W2 (im Mittelteil und auch außenseitig) sind Düsenträger angeordnet, die mit Reinigungsdüsen besetzt sind, um so die Bürstenwalze von allen Seiten mit einem Wasserstrahl zu versorgen. Damit wird eine günstige Wasserreinigung des zu reinigenden Rades ermöglicht. Durch die seitlich in den Düsenträgern angeordneten Reinigungsdüsen werden somit auch die Seitenflächen des Vorderrades G221 und später auch die Seitenflächen der Hinterräder G211 an der Hinterachse G21 des Golftrolleys gereinigt. Damit ist es auch möglich, sowohl die Speichen des Hinterrades 11 als auch des Vorderrades 26 seitlich zu reinigen. Der Düsenträger mit den Reinigungsdüsen sind in den Figuren nicht dargestellt.

In Fahrtrichtung hinter der Bürstenwalze W2 ist eine weitere Antriebswalze W3 angeordnet. Diese besteht aus zwei, im Durchmesser verschiedenen Walzenteilen, wobei der im Durchmesser vergrößerte mittlere Walzenteil mit dem kleineren mittleren Walzenteil der Bürstenwalze W2 korrespondiert und einen besonderen Reinigungsspalt für das zu reinigende, mittige Vorderrad bildet. Während der Reinigung des Vorderrades hat der Benutzer die Möglichkeit, gleichzeitig die Schlägerreinigungsstation L zu benutzen. Sie besteht nach einer bevorzugten Ausgestaltung aus zwei in Fahrtrichtung hintereinander angeordneten Boxen, nämlich einer Nassreinigungsbox L1 und einer getrennt davon ausgebildeten Trocknungsbox L2.

Fig. 3 zeigt schematisch in der Seitenansicht den Reinigungsvorgang, bei dem während der Reinigung der Schuhsohlen mit der Schuhreinigungsstation S gleichzeitig auch der Golftrolley GT durch Angreifen an der Vorderachse G22 mit dem Vorderrad G221 in der Fahrgestellreinigungsstation W festgehalten wird, und dabei ein bestimmter Arbeitsabstand 39 gegeben ist. Dieser ist durch den Abstand zwischen der vertikalen Arbeitslinie 38 durch die Schuhreinigungsstation S und der Hinterachse G21 des Golftrolleys GT definiert. Die Arbeitslinie 36 ist durch das Vorderrad G221 des Golftrolleys GT definiert.

Ist der Benutzer nach der Benutzung der Schuhreinigungsstation S im Bereich der Arbeitslinie 38 auch mit der Reinigung des Vorderrades G221 fertig, wird der Golftrolley GT um den Abstand 39 weiterverschoben. Auf diese Weise gelangen die Hinterräder G221 des Golftrolleys GT in den Bereich der Fahrgestellreinigungsstation W. Der Benutzer steht dann, wie in Fig. 4 dargestellt, etwa auf Höhe der Schlägerreinigungsstation L. Er kann die Schläger in den beiden, parallel zu betreibenden Boxen L1, L2 reinigen, während die Fahrgestellreinigungsstation W die Hinterräder G221 des Golftrolleys GT reinigt.

Die erfindungsgemäße Reinigungsstraße R kann auch für vereinfachte Reinigungsaufgaben genutzt werden, z.B. für einen abgekürzten Durchschubbetrieb. So können von einer Person z.B. nur die Fahrgestellreinigungsstation für den Golftrolley und die Schuhreinigungsstation bei einem Durchlauf genutzt werden. Andererseits können bei einem verkürzten Durchlauf z.B. auch nur die Schlägerreinigungsstation und die Ballreinigungsstation genutzt werden. In diesem Fall kann der Reinigungsschacht W5 über ein nicht näher dargestelltes Abdeckblech geschlossen sein, um eine stolperfreie Begehbarkeit durch die Person und eine einfache Überfahrbarkeit mit dem Golftrolley zu ermöglichen.

### Bezugszeichenliste

- R: Reinigungsstraße
- R2: Auffahrrampe (Einfahrtseite)
- R1: befahrbare Plattform
- R11: Innenraum (Aggregate)
- R12a: erste Arbeitsteilfläche im Bereich der Schuh- und Handreinigungsstationen (Einfahrtseite)
- R12b: zweite Arbeitsteilfläche vor der Fahrgestellreinigungsstation und im Bereich der Schlägerreinigungsstation (mittig)
- R12c: dritte Arbeitsteilfläche nach der Fahrgestellreinigungsstation
- R16: erste Seitenflanke (Geländer, Spritzschutz) in Durchschubrichtung
- R17: zweite Seitenflanke (Geländer, Spritzschutz) in Durchschubrichtung
- R3: Abfahrrampe (Ausfahrtseite)
- EA: Bedienkonsole, z.B. Ein- und Ausschalter
- A-A: Schnittachse
- 36: Arbeitslinie Radreinigungsstation
- 37: Mittenlinie auf Höhe Hinterachse Golftrolley
- 38: Arbeitslinie Schuhreinigungsstation
- 39: Arbeitsabstände
- 40: Arbeitslinie Schlägerreinigungsstation
- GL: Golfschläger
- GB: Golfbälle
- GS: Golfschuhe
- GT: Golftrolley
- G1: Tasche für Golfzubehör, insbesondere Schläger, Bälle usw.
- G2: Fahrgestell
- G21: Hinterachse
- G211: Hinterräder
- G22: Vorderachse
- G221: Vorderrad
- G3: Handgriff
- D1: Auffahrrichtung
- D2: Durchschubrichtung
- D3: Abfahrrichtung
- H: Handreinigungsstation
- H1: Pressluftpistole
- H2: Wasserspritzdüse
- S: Schuhreinigungsstation
- S1: Gitterrost
- S2: Rotationsbürste
- L: Schlägerreinigungsstation
- L1: Reinigungsbox, insbesondere mit sensorgesteuerten Wasserdüsen
- L2: Trocknungsbox mit sensorgesteuerten Luftdüsen
- B: Ballreinigungsstation
- W: Fahrgestellreinigungsstation, insbesondere zur Radreinigung
- W1: Reinigungswalze
- W2: Bürstenwalze
- W3: Antriebswalze
- W5: Reinigungsschacht
- W6: Führung für ein Rad, insbesondere mittiges Vorderrad
- A1: vorbereitender Arbeitstakt Einfahren/Auffahren des Golftrolleys (Fig. 2)
- A2: erster Arbeitstakt / erste Reinigungsschritte Schuhreinigungsstation + Handreinigungsstation (Pressluft + Druckwasser) + Fahrgestellreinigungsstation Vorderachse (Fig. 3)
- A3: zweiter Arbeitstakt / weitere Reinigungsschritte Schlägerreinigungsstation + Ballreinigungsstation + Fahrgestellreinigungsstation Hinterachse (Fig. 4)
- A4: abschließender Arbeitstakt Abfahren/Herausfahren des Golftrolleys (Fig. 5)

## Patentansprüche

1. Verfahren zum Betrieb einer Reinigungsstraße (R) für das Golfzubehör einer einzelnen Person, insbesondere zur wassergestützten Reinigung von Golfschlägern (GL), Golfbällen (GB), Golftrolleys (GT) und/oder Golfschuhen (GS), mit mindestens teilweise hintereinander angeordneten Reinigungsstationen (H, S, L, B, W) jeweils für zumindest ein Golfzubehör der Person, wobei
das zu reinigende Golfzubehör (GL, GB, GT, GS) von der Person in einem getakteten Durchschubbetrieb an Reinigungsstationen (H, S, L, B, W) der Reinigungsstraße (R) herangeführt wird, und
pro Arbeitstakt (A2, A3) zumindest zwei Reinigungsstationen (W, S; W, L, B; W, S, H) gleichzeitig nutzbar sind.

2. Verfahren nach Anspruch 1, **dadurch gekennzeichnet, dass**
in einem Arbeitstakt (A2) eine Reinigungsstation (W) für das Fahrgestell eines Golftrolleys (GT) eine Vorderachse (G22) reinigt und gleichzeitig mindestens eine weitere Reinigungsstation nutzbar ist, insbesondere eine Reinigungsstation (S) für Golfschuhe (GS).

3. Verfahren nach Anspruch 1 oder 2, **dadurch gekennzeichnet, dass**
in einem weiteren Arbeitstakt (A3) die Reinigungsstation (W) für das Fahrgestell eines Golftrolleys (GT) eine Hinterachse (G21) reinigt und gleichzeitig mindestens eine weitere Reinigungsstation nutzbar ist, insbesondere eine Reinigungsstation für Golfschläger (GL).

4. Verfahren nach einem der vorangegangenen Ansprüche, **dadurch gekennzeichnet, dass**
eine Handreinigungsstation (H) mit Druckluft und/oder Spitzwasser (H1, H2) und mindestens eine weitere Reinigungsstation (S, L, B, W) in einem Arbeitstakt (A1, A2, A3) gleichzeitig nutzbar sind.

5. Reinigungsstraße (R) für das Golfzubehör einer einzelnen Person, insbesondere zur wassergestützten Reinigung von Golfschlägern (GL), Golfbällen (GB), Golftrolleys (GT) und/oder Golfschuhen (GS), mit Reinigungsstationen (H, S, L, B, W) jeweils für zumindest ein Golfzubehör (GL, GB, GT, GS) der Person, **gekennzeichnet durch**
eine Plattform (R1), an der die Reinigungsstationen (H, S, L, B, W) derart teilweise hintereinander angeordnet sind, dass an diese das zu reinigende Golfzubehör (GL, GB, GT, GS) von der Person in einem Durchschubbetrieb mit zumindest zwei aufeinander folgenden Arbeitstakten (A2, A3) heranführbar und dabei zumindest zwei Reinigungsstationen (W, S; W, L; W, S, H) gleichzeitig in einem Arbeitsabstand (36, 37, 38, 39) nutzbar sind.

6. Reinigungsstraße nach Anspruch 5, **dadurch gekennzeichnet, dass** die Reinigungsstraße (R) aufweist
eine Handreinigungsstation (H) mit einer Pressluftpistole für Druckluft (H1) und/oder einer Düse für Spitzwasser (H2), die im Bereich einer Einfahrtseite (R2; R12a) der Plattform (R1) angeordnet ist.

7. Reinigungsstraße nach Anspruch 5 oder 6, **dadurch gekennzeichnet, dass** die Reinigungsstraße (R)
eine Reinigungsstation (S) für Schuhe (GS) aufweist, die im Bereich einer Einfahrtseite (R2; R12a) der Plattform (R1) angeordnet ist.

8. Reinigungsstraße nach Anspruch 7, **dadurch gekennzeichnet, dass** die Reinigungsstation (S) für Schuhe (GS)
zumindest eine Rotationsbürste (S2) aufweist, welche in die Plattform (R1, R12a) eingelassen ist.

9. Reinigungsstraße nach einem der Ansprüche 5 bis 8, **dadurch gekennzeichnet, dass** die Reinigungsstraße (1)
eine Schlägerreinigungsstation (L; GL) aufweist.

10. Reinigungsstraße nach Anspruch 9, **dadurch gekennzeichnet, dass** die Schlägerreinigungsstation (L; GL) eine
sensorgesteuerte Reinigungs- und Trocknungsbox (L1, L2) aufweist.

11. Reinigungsstraße nach Anspruch 9 oder 10, **dadurch gekennzeichnet, dass** die Schlägerreinigungsstation (L; GL)
im Bereich einer annähernd mittigen Arbeitsteilfläche (R12b) der Plattform (R1) angeordnet ist.

12. Reinigungsstraße nach einem der Ansprüche 5 bis 11, **dadurch gekennzeichnet, dass** die Reinigungsstraße (1)
eine Ballreinigungsstation (B) aufweist, welche insbesondere im Bereich annähernd mittigen Arbeitsteilfläche (R12b) der Plattform (R1) angeordnet ist.

13. Reinigungsstraße nach einem der Ansprüche 5 bis 12, **dadurch gekennzeichnet, dass** die Reinigungsstraße (R)
eine Reinigungsstation (W) für das Fahrgestell (G2) eines Golftrolleys (GT) aufweist, insbesondere zur Radreinigung, welche in die Plattform (R1) eingelassen ist.

14. Reinigungsstraße nach Anspruch 13, **dadurch gekennzeichnet, dass** die Reinigungsstation (W) für das Fahrgestell (G2)
eine Reinigungs-, Bürsten- und Antriebswalze (W1, W2, W3) aufweist, die gemeinsam mit einer Spritzwassereinrichtung in einem Reinigungsschacht (W5) in der Plattform (R1) quer zur Durchschubrichtung (D2) eines Golftrolleys (GT) parallel angeordnet sind.

15. Reinigungsstraße nach Anspruch 13 oder 14, **dadurch gekennzeichnet, dass** die Reinigungsstation (W) für das Fahrgestell (G2)
im Bereich einer Ausfahrtseite (R3; R12c) der Plattform (R1) angeordnet ist.
